Europäisches Patentamt

European Patent Office

Office européen des brevets

(19)

(11) **EP 0 929 019 A1**

(12) # DEMANDE DE BREVET EUROPEEN

(43) Date de publication:
**14.07.1999 Bulletin 1999/28**

(51) Int. Cl.$^6$: **G05D 16/20**, F04D 27/02,
F04B 49/24

(21) Numéro de dépôt: **98403307.6**

(22) Date de dépôt: **28.12.1998**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **06.01.1998 FR 9800036**

(71) Demandeur: **ALCATEL**
**75008 Paris (FR)**

(72) Inventeurs:
- **Briton, Jean Philippe**
  **74370 Metz-Tessy (FR)**
- **NMeel, Thierry**
  **74940 Annecy-le-Vieux (FR)**

(74) Mandataire:
**Buffière, Michelle et al
COMPAGNIE FINANCIERE ALCATEL
Dépt. Propriété Industrielle,
30, avenue Kléber
75116 Paris (FR)**

(54) **Système pour assurer une régulation de pression dans une enceinte pompée par une pompe à vide**

(57) Système pour assurer une régulation de pression dans une enceinte (1) pompée par une pompe à vide (3), caractérisé en ce qu'une conduite (5), équipée d'une vanne motorisée, à ouverture variable (6), relie un ou des étages (8) proches du refoulement de la pompe à un ou des étages (9) proches de son aspiration, le degré d'ouverture de la vanne (6) étant commandé par un signal (10) en provenance d'un circuit électronique (11) d'asservissement de la pression P de l'enceinte (1) à une valeur $P_1$ de consigne, ledit circuit (11) recevant en entrée un signal (12) représentatif de la pression P mesurée (13) dans l'enceinte.

EP 0 929 019 A1

## Description

La présente invention concerne un système pour assurer une régulation de pression dans une enceinte pompée par une pompe à vide.

Dans les procédés industriels de fabrication ou de traitement de produits dans des enceintes alimentées en gaz de traitement à des très basses pressions, il est nécessaire de régler la pression de l'enceinte.

C'est le cas, par exemple, dans les procédés de fabrication et de traitement des semiconducteurs.

Un procédé connu pour effectuer la régulation de pression dans une enceinte pompée par une pompe à vide est d'utiliser en série, à l'aspiration de la pompe, une vanne à conductance variable permettant de faire varier le flux pompé et donc la pression dans l'enceinte. Le degré d'ouverture de la vanne est réglé par un signal de commande provenant d'un circuit de régulation en partant d'une pression de consigne et de la pression mesurée dans l'enceinte.

Cette façon de procéder est onéreuse et encombrante.

La présente invention a pour but de proposer un système moins coûteux et également moins encombrant.

L'invention a ainsi pour objet un système pour assurer une régulation de pression dans une enceinte pompée par une pompe à vide, caractérisé en ce qu'une conduite, équipée d'une vanne motorisée à ouverture variable, relie un ou quelques étages proches du refoulement de la pompe à un ou quelques étages proches de son aspiration, le degré d'ouverture de la vanne étant commandé par un signal en provenance d'un circuit électronique d'asservissement de la pression P de l'enceinte à une valeur $P_1$ de consigne, ledit circuit recevant en entrée un signal représentatif de la pression P mesurée dans l'enceinte.

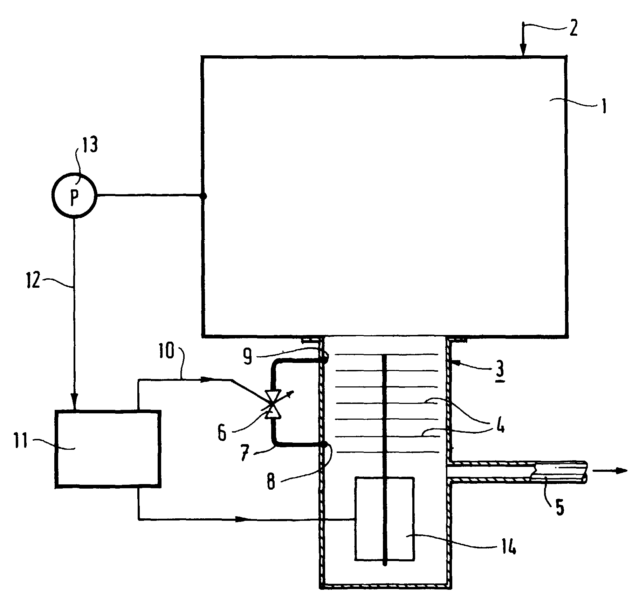

On va maintenant donner la description d'un exemple de mise en oeuvre de l'invention en se référant au dessin annexé comprenant une figure unique.

En se référant à la figure, on voit une enceinte 1. Il s'agit, par exemple, d'une chambre de procédé de traitement d'un semiconducteur. Le traitement a lieu en atmosphère très raréfiée d'un gaz de traitement dont l'introduction est figurée en 2.

Pour maintenir la basse pression exigée, l'enceinte 1 est pompée par une pompe à vide 3.

On a figuré ici une pompe secondaire turbomoléculaire comportant une série d'étages à ailettes 4. Son refoulement 5 est relié à une pompe primaire non représentée. On pourrait également utiliser un autre type de pompe telle qu'une pompe Holweck, une pompe hybride ou encore une pompe primaire multi-étagée par exemple une roots multi-étagée.

Selon l'invention, une conduite 7, équipée d'une vanne motorisée à ouverture variable 6, relie un ou quelques étages 8 proches du refoulement à un ou plusieurs étages 9 proches de l'aspiration. Cette vanne à ouverture variable assure une recirculation permettant de faire varier le flux de gaz recirculé dans la pompe et donc de faire varier la quantité de gaz directement pompé dans la chambre de procédé 1.

Le degré d'ouverture de la vanne 6 est commandé par un signal 10 en sortie d'un circuit électronique 11 comprenant un circuit d'asservissement de la pression P régnant dans l'enceinte à une valeur de consigne $P_1$ que l'on affiche. Le circuit d'asservissement est classique et non représenté. En entrée, il reçoit un signal 12 provenant d'une jauge de pression 13 mesurant la pression P de l'enceinte 1.

Le circuit électronique 11 comprend également les circuits nécessaires au pilotage du moteur 14 de la pompe 3.

Ainsi, si $Q_t$ désigne le flux total admissible dans la pompe, $Q_r$ le flux de gaz recirculé par la conduite 5 et $Q_p$ le flux provenant directement de l'enceinte 1, on a : $Q_t = Q_r + Q_p$. Si l'on fait varier $Q_r$ en modifiant l'ouverture de la vanne 6, le flux $Q_p$ varie également puisque la vitesse de la pompe est fixe et donc son flux total $Q_t$.

Ainsi, le système selon l'invention est particulièrement avantageux par rapport à l'art antérieur cité, puisqu'au lieu d'avoir une vanne de gros diamètre à l'aspiration de la pompe modulant le flux total donc une vanne onéreuse et encombrante, on n'a plus qu'une petite vanne qui ne laisse passer que le flux $Q_r$ de recirculation qui est petit par rapport au flux total. La vanne est donc beaucoup plus petite et beaucoup moins chère. Le prix est grosso modo divisé par 10.

## Revendications

1.    Système pour assurer une régulation de pression dans une enceinte (1) pompée par une pompe à vide (3), caractérisé en ce qu'une conduite (5), équipée d'une vanne motorisée, à ouverture variable (6), relie un ou des étages (8) proches du refoulement de la pompe à un ou des étages (9) proches de son aspiration, le degré d'ouverture de la vanne (6) étant commandé par un signal (10) en provenance d'un circuit électronique (11) d'asservissement de la pression P de l'enceinte (1) à une valeur $P_1$ de consigne, ledit circuit (11) recevant en entrée un signal (12) représentatif de la pression P mesurée (13) dans l'enceinte.

**Office européen des brevets**

## RAPPORT DE RECHERCHE EUROPEENNE

Numéro de la demande

EP 98 40 3307

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 203 701 A (W.C. ABBEY) 20 mai 1980 * colonne 1, ligne 60 - colonne 2, ligne 8; figure 1 * | 1 | G05D16/20 F04D27/02 F04B49/24 |
| A | FR 1 470 495 A (ÖSTERREICHISCHE MINERALÖLVERWALTUNG) 18 mai 1967 * page 3, colonne de gauche, ligne 4 - ligne 38; figure 1 * | 1 | |
| A | EP 0 024 823 A (IMPERIAL CHEMICAL INDUSTRIES) 11 mars 1981 * page 6, ligne 8 - ligne 18; figure 1 * | 1 | |

**DOMAINES TECHNIQUES RECHERCHES (Int.Cl.6)**

F04D
F04C
F04B
G05D

Le présent rapport a été établi pour toutes les revendications

| Lieu de la recherche | Date d'achèvement de la recherche | Examinateur |
|---|---|---|
| LA HAYE | 13 avril 1999 | Goetz, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 98 40 3307

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-04-1999

| Document brevet cité au rapport de recherche | Date de publication | Membre(s) de la famille de brevet(s) | Date de publication |
|---|---|---|---|
| US 4203701 A | 20-05-1980 | AUCUN | |
| FR 1470495 A | 18-05-1967 | BE 677632 A | 01-08-1966 |
| | | CH 481358 A | 15-11-1969 |
| | | DE 1545336 A | 22-01-1970 |
| | | GB 1133493 A | |
| | | NL 6603003 A | 19-09-1966 |
| | | US 3406895 A | 22-10-1968 |
| EP 0024823 A | 11-03-1981 | JP 56038599 A | 13-04-1981 |

EPO FORM P0460

Pour tout renseignement concernant cette annexe : voir Journal Officiel de l'Office européen des brevets, No.12/82